(19) Europäisches Patentamt
European Patent Office
Office européen des brevets

(11) Publication number: 0 352 992 A2

# (12) EUROPEAN PATENT APPLICATION

(21) Application number: 89307470.8

(22) Date of filing: 21.07.89

(51) Int. Cl.4: A01N 39/02 , //(A01N39/02, 43:70,39:02)

(30) Priority: 28.07.88 JP 186835/88

(43) Date of publication of application: 31.01.90 Bulletin 90/05

(84) Designated Contracting States: DE FR GB

(71) Applicant: UBE INDUSTRIES, LTD.
12-32, Nishihonmachi 1-chome
Ube-shi, Yamaguchi-ken 755(JP)

(72) Inventor: Takamura, Seiji Corporate Research & Development
Ube Industries, Ltd. Ark Mori Building
12-32, Akasaka 1-chome Minato-ku Tokyo(JP)
Inventor: Abe, Takaaki Ube Research Laboratory
Ube Industries, Ltd. 1978-5, Oaza Kogushi
Ube-shi Yamaguchi-ken(JP)

(74) Representative: Brock, Peter William et al
URQUHART-DYKES & LORD 91 Wimpole Street
London W1M 8AH(GB)

## (54) Herbicidal composition.

(57) There is disclosed a herbicidal composition which comprises, as active ingredients, a butanamide derivative represented by the following formula:

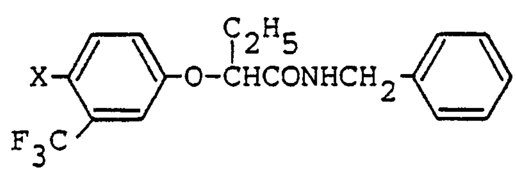

wherein X represents a chlorine atom or a fluorine atom,
and at least one of 2-(4-chloro-6-ethylamino-1,3,5-triazin-2-ylamino)-2-propionitrile, 2-(2-methyl-4-chlorophenoxy)-propionic acid, and a salt or an ester of these compounds.

EP 0 352 992 A2

# Herbicidal composition

## BACKGROUND OF THE INVENTION

This invention relates to a herbicidal composition comprising two kinds of chemicals, which shows synergistic effect to various field weeds.

A herbicidal composition comprising a butanamide derivative represented by the formula:

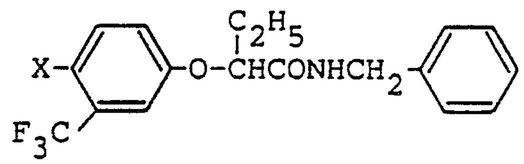

(I)

wherein X represents a chlorine atom or particularly a fluorine atom,
has been disclosed in Japanese Provisional Patent Publication No. 10749/1988. This herbicidal composition inhibits growth of chlorophyll and has a characteristic of effectively preventing broadleaf weeds. This compound may be used either a racemic compound or an optically active substance, but particularly (S)-(-) substance is active.

Also, 2-(4-chloro-6-ethylamino-1,3,5-triazin-2-ylamino)-2-propionitrile (hereinafter abbreviated to as "Cyanazine") has been known as a herbicidal composition effective to field anual weeds at before generation or initial stage of growth. Cyanazine has a disadvantage of less effective to grass weeds and a part of broadleaf weeds such as cleavers, etc.

Further, 2-(2-methyl-4-chlorophenoxy)propionic acid (hereinafter abbreviated to as "Mecoprop"), its salts such as sodium salt, potassium salt, ammonium salt, amine salt, etc. and alkyl esters having 1 to 8 carbon atoms such as methyl ester, butyl ester, isooctyl ester, etc. have been known as a hormone type contacting herbicidal composition, and until now have been used mainly as a herbicidal composition for broadleaf weeds.

Use of a herbicidal composition for a long term causes change in flora of weeds whereby kinds of weeds which are resistive to the conventional herbicidal composition increase. Thus, it has been desired to develop a herbicidal composition which is effective to a wider range of weeds including respective species and to cope with this, a mixed agent combined with several kinds of herbicidal compositions has been proposed. For example, while Isoproturon is a herbicidal composition which has most popularly supported by farmers in wheat field in Europe for preventing weeds belonging to grass weeds, in recent years, kinds of weeds which cannot be prevented such as cleavers, birdseye speedwell, violet and henbit have increased. In order to cope with this, there has been developed a three-components mixed agent wherein Mecoprop and Ioxynil are mixed with Isoproturon. However, this herbicidal composition is also required to be improved since it does not show sufficient activity to cleavers and violet.

## SUMMARY OF THE INVENTION

The present inventors have widely studied concerning a herbicidal composition having wide herbicidal spectrum and having no agricultural damage to crops in order to overvome the above problems, and as the results, they have found that the herbicidal composition of the present invention shows synergistic effects to various weeds such as black-grass, cleavers, speedwell, violet, henbit, chickweed, mayweed, etc., and on the other hand, shows extremely safety to wheats, to accomplish the present invention.

The herbicidal composition of the present invention comprises, as effective ingredients, a butanamide derivative represented by the following formula:

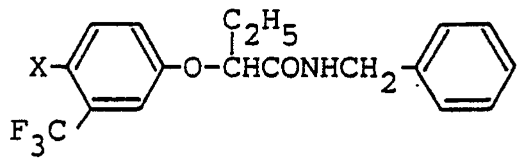

wherein X represents a chlorine atom or a fluorine atom, and at least one of 2-(4-chloro-6-ethylamino-1,3,5-triazin-2-ylamino)-2-propionitrile (Cyanazine), 2-(2-methyl-4-chlorophenoxy)propionic acid (Mecoprop), and a salt or an ester thereof.

## DESCRIPTION OF THE PREFERRED EMBODIMENTS

The herbicidal composition of the present invention comprises the above butanamide derivative and Cyanazine or Mecoprop as active ingredients. The butanamide derivative includes a racemic compound and an optically acitive substance. A salt or an ester of Cyanazine or Mecoprop may include those conventionally used ones. A compositional ratio of these effective ingredients is preferably 0.5 to 4 parts by weight in case of Cyanazine and 3 to 30 parts by weight in case of Mecoprop based on 1 part by weight of the compound of the formula (1).

For preparation of the herbicidal composition of the present invention, it can be formulated to the preparations, by using a carrier, a solvent, a surfactant, other auxiliary agents for agricultural formulations, and the like, for example, wettable powders, emulsions, flowable formulation, dry flowable formulation, granules and the like. These preparations may contain effective ingredients in an amount of 1 to 80 % by weight ratio. As the solid carriers, there may be mentioned, for example, talc, clay, kaoline, diatomaceous earth, calcium carbonate, wood powder, starch, and the like, as the liquid carriers, there may be mentioned benzene, xylene, n-hexane, gum arabic, vinyl chloride, and the like, and as the gaseous carriers, there may be mentioned carbon dioxide, propane, butane and the like. Further, it may be optionally blended with any auxiliary agents for preparation, for example, spreaders, diluents, surface active agents, solvents and the like. Moreover, it may be optionally admixed with fungicides, insecticides and other herbicides; urea, ammonium sulfate, ammonium phosphate, potassium salts and other fertilizers; soil conditioners and the like.

The herbicidal composition of the present invention shows excellent herbicidal effects against various weeds in cereal fields by subjecting to soil treatment or foliar treatment at an initial stage of generation. On the other hand, it does not show any damage to crops. Kinds of weeds to be objected are blackgrass, chickweed, mayweed, cleavers, speedwell, Ivy leaf speedwell, henbit, red dead nettle, pansy, shepherd's purse, etc. Also, as the crops to be used safety, there may be mentioned wheat, barley, rye, oats, corn, rice, etc.

An amount of the herbicidal composition of the present invention to be applied may differ depending on the weather conditions, soil conditions, kinds and sizes of weeds to be objected, but generally a total amount of chemicals in the mixed agent is in the range of 100 to 5000 g/ha in terms of amounts of effective ingredient.

## EXAMPLES

In the following, herbicidal effects of the herbicidal composition of the present invention will be explained in more detail by referring to experimental examples.

### Experimental example

Wagner pots, each having an area of 1/5000 are, were packed with an upland soil (sandy soil) and then seeds of the following plants were sowed therein.

| | |
|---|---|
| Wheat | *Triticum aestivum* |
| Blackgrass | *Alopecurus myosuroides* |
| Cleavers | *Galium aparine* |
| Speedwell | *Veronica persica* |
| Field pansy | *Viola arvensis* |
| Matricaria | *Matricaria inodora* |
| Chickweed | *Stellaria media* |

When wheat grew up to 2 to 3 leaf stage and weeds grew up to 4 to 5 leaf stage, each wettable powder of sample compounds, which had been prepared in accordance with the following preparation example 1, was uniformly sprayed the foliar of weeds at the predetermined dose rate by using a pressure sprayer. After the treatment, these weeds were grown up in a non-temperature controlled green house (0 to 18 °C), and the herbicidal effects of each test compound were assested after four weeks. The herbicidal effects were shown by a restraint ratio according to the following formula:

$$\text{Restraint ratio (\%)} = \left(1 - \frac{\text{Fresh weight at treated plot}}{\text{Fresh weight at untreated plot}}\right) \times 100$$

by weighing a fresh weight of top part of weeds which is remained alive at assessment.

Also an expected value of a summational effect of the mixed agent in the table was calculated from Colby's equation shown below.

$$\text{Expected value of additive effect (\%)} = X + \left(Y - \frac{X \cdot Y}{100}\right)$$

wherein X represents a restraint ration (%) when a herbicidal composition A is treated with a chemical amount of a g/ha; and Y represents a restraint ratio (%) when a herbicidal composition B is treated with a chemical amount of b g/ha.

(see S.R. Colby, "Weed", vol. 15, pp. 20 to 22 (1967))

Table 1

| Herbicidal effect due to foliar treatment | | | | | | | |
|---|---|---|---|---|---|---|---|
| Chemicals amount of effective ingredient applied | Wheat | Blackgrass | Cleavers | Speedwell | Field pansy | Matricaria | Chickweed |
| Compound 1 | | | | | | | |
| 250 g/ha | 0 | 25 | 95 | 98 | 60 | 55 | 40 |
| 125 " | 0 | 10 | 85 | 95 | 45 | 30 | 25 |
| Cyanazine | | | | | | | |
| 300 g/ha | 0 | 5 | 15 | - | 80 | 75 | 60 |
| Compound 1 + Cyanazine | | | | | | | |
| 250 + 300 g/ha | 0 | 50 (29) | 100 (96) | 100 (-) | 100 (92) | 100 (89) | 92 (76) |
| 125 + 300 g/ha | 0 | 30 (14) | 100 (87) | 100 (-) | 100 (89) | 100 (79) | 80 (70) |
| Compound 2 | | | | | | | |
| 125 g/ha | 0 | 35 | 94 | 98 | 60 | 60 | 35 |
| Compound 2 + Cyanazine | | | | | | | |
| 125 + 300 g/ha | 0 | 40 (38) | 100 (95) | 100 (-) | 100 (92) | 100 (90) | 90 (74) |
| Mecoprop | | | | | | | |
| 1000 g/ha | 0 | 5 | 35 | 50 | 15 | 35 | 5 |
| Compound 1 + Mecoprop | | | | | | | |
| 250 + 1000 g/ha | 0 | 35 (29) | 100 (97) | 100 (99) | 95 (66) | 85 (71) | 50 (43) |
| 125 + 1000 g/ha | 0 | 20 (14) | 100 (90) | 100 (98) | 95 (53) | 85 (55) | 50 (29) |

Compound 1: N-benzyl-2-(4-fluoro-3-trifluoromethylphenoxy)butanamide, melting point: 75 to 76 °C.
Compound 2: Optically active isomer (S)-(-) of Compound 1, melting point: 79 to 80 °C, $[\alpha]_D^{25}$ = -37 (C = 0.1, MeOH), Chemcial purity: 98 %.
Values in parentheses are expected value of an arithmetical effect.

As can be seen from Table 1, the herbicidal effects of the mixed agent of the compound 1 and Cyanazine and the mixed agent of the compound 1 and Mecoprop to various weeds, particularly to field pansy are extremely higher than those of the expected values of the additive effect which can be expected from the herbicidal effect when each component is used singly, and thus it can be understood that mixed use of these herbicidal agents clearly shows a synergistic effect. On the other hand, the herbicidal composition of the present invention did not show any damage to wheat.

Next, preparation examples are shown. In the following description, all "part" represent "part(s) by weight".

Preparation example 1

20 parts of N-benzyl-2-(4-fluoro-3-trifluoromethylphenoxy)butanamide, 20 parts of Cyanazine, 7 parts of sodium lignosulfonate, 3 parts of Laurylsulfuric acid sodium salt and 50 parts of kaolin were homogeneously

mixed, followed by pulverization, to obtain wettable powder.

Preparation example 2

6 parts of N-benzyl-2-(4-chloro-3-trifluoromethylphenoxy)butanamide, 30 parts of Mecoprop, 10 parts of polyoxyethylenealkylphenyl ether and 5 parts of calcium dodecylbenzenesulfonate were dissolved in 44 parts of xylene to obtain an emulsion.

Preparation example 3

10 parts of N-benzyl-2-(4-fluoro-3-trifluoromethylphenoxy)butanamide, 10 parts of Cyanazine, 5 parts of sodium lignosulfonate, 5 parts of polyoxyethylenesorbitol mono oleate and 70 parts of water were homogeneously mixed, followed by wettable pulverization until grains of effective ingredients became 5 microns or less, to obtain flowable formulation.

## Claims

1. A herbicidal composition comprising, as effective ingredients, a butanamide derivative represented by the following formula:

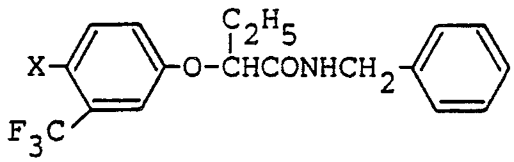

wherein X represents a chlorine atom or a fluorine atom,
and at least one of 2-(4-chloro-6-ethylamino-1,3,5-triazin-2-ylamino)-2-propionitrile, 2-(2-methyl-4-chlorophenoxy)propionic acid, and a salt or an ester of these compounds.

2. A herbicidal composition according to Claim 1, wherein said butanamide derivative is N-benzyl-2-(4-fluoro-3-trifluoromethylphenoxy)butanamide or N-benzyl-2-(4-chloro-3-trifluoromethylphenoxy)butanamide.

3. A herbicidal composition according to Claim 1, wherein said composition contains 0.5 to 4 parts by weight of 2-(4-chloro-6-ethylamino-1,3,5-triazin-2-ylamino)-2-propionitrile based on 1 part by weight of said butanamide derivative.

4. A herbicidal composition according to Claim 1, wherein said composition contains 3 to 30 parts by weight of 2-(2-methyl-4-chlorophenoxy)propionic acid based on 1 part by weight of said butanamide derivative.

5. A herbicidal composition according to Claim 1, wherein said composition contains 1 to 80 % by weight of the effective ingredients.

6. A herbicidal composition according to Claim 1, wherein said composition comprises N-benzyl-2-(4-fluoro-3-trifluoromethylphenoxy)butanamide and 2-(4-chloro-6-ethylamino-1,3,5-triazin-2-ylamino)-2-propionitrile.

7. A herbicidal composition according to Claim 1, wherein said composition comprises N-benzyl-2-(4-fluoro-3-trifluoromethylphenoxy)butanamide and 2-(2-methyl-4-chlorophenoxy)propionic acid.

8. A herbicidal composition according to Claim 1, wherein said composition comprises N-benzyl-2-(4-chloro-3-trifluoromethylphenoxy)butanamide and 2-(4-chloro-6-ethylamino-1,3,5-triazin-2-ylamino)-2-propionitrile.

9. A herbicidal composition according to Claim 1, wherein said composition comprises N-benzyl-2-(4-chloro-3-trifluoromethylphenoxy)butanamide and 2-(2-methyl-4-chlorophenoxy)propionic acid.